# EUROPEAN PATENT SPECIFICATION

(11) **EP 0 575 678 B1**
(45) Date of publication and mention of the grant of the patent: **08.01.1997**
(21) Application number: 92308604.5
(22) Date of filing: 22.09.1992
(51) Int. Cl.: H04B 7/195

(54) **Medium-earth-altitude satellite-based cellular telecommunications system**
Zellulares Kommunikationssystem beruhend auf Satelliten mittlerer Höhe
Système de télécommunication cellulaire basé sur des satéllites d'altitude moyenne

(30) Priority: 28.05.1992 US 890510
(43) Date of publication of application: 29.12.1993
(60) Divisional application: 96115571.0
(73) Proprietor: TRW INC., Cleveland Ohio 44124 (US)
(72) Inventor: Horstein, Michael, Los Angeles, CA 90049 (US); Cress, Peter H., Manhattan Beach, CA 90266 (US); Rusch, Roger J., Palos Verdes Estates, CA 90274 (US)
(74) Representative: Schmidt, Steffen J., Dipl.-Ing.

(56) References cited:
- EP-A- 0 365 885
- EP-A- 0 510 789
- MILCOM 1987 vol. 2, no. 20, October 1987, WASHINGTON,D.C.,US; pages 404 - 411 CLARE ET AL 'Multiple satellite networks : performance evaluation via simulation'
- AIAA 8TH COMMUNICATIONS SATELLITE SYSTEMS CONFERENCE April 1980, ORLONDO,US;
- pages 198 - 204 D.WADSWORTH 'Longitude-reuse plan doubles communication satellite capacity of geostationary arc'
- IEEE TRANSACTIONS ON AEROSPACE AND ELECTRONIC SYSTEMS vol. 16, no. 5, September 1980, NEW-YORK,US; pages 656 - 673 BALLARD 'ROSETTE CONSTELLATIONS OF EARTH SATELLITES'
- Before the Federal Communications Commission, Washington, D.C. 20554 "Application of TRW Inc. for authority to construct a new Communications Satellite System Odyssey(sm)" dated 31st May 1991 and laid open to public inspection on 24th October 1991
- Before the Federal Communications Commission, Washington, D.C. 20554 "Federal Communications Commission Record DA 91-1308, 6 FCC Red No 22, Public Notice, Report No. DS-1134", pages 6002 and 6003, published 24th October 1991
- AIAA 92-2060 "Odyssey, A Constellation For Personal Communications", by Rusch et al; 14th AIAA International Communication Satellite Systems Conference & Exhibit, March 22-26 1992, Washington, D.C.

## Description

### BACKGROUND OF THE INVENTION

This invention relates generally to cellular telecommunications systems and, more particularly, to satellite-based cellular telecommunications systems comprising the features of the pre-charactizing portion of claim 1. Such a system is disclosed in the Application of TRW Inc. to the Federal Communications Commission of the USA for authority to construct a communications satellite system "Odyssey (SM)" dated May 31, 1991.

The use of mobile cellular telephones has proliferated in the many large metropolitan areas in which cellular telecommunications systems have been installed. Cellular telecommunications systems provide voice communications between a mobile telephone user and fixed telephone users or to other mobile telephone users, as well as data communications for mobile facsimile machines and modem-equipped computers. A typical cellular telephone systems includes a grid of service zones or cells, with each cell having a base station situated near its center. A mobile telephone user located in a particular cell is connected to that cell's base station through low-power radio frequency (rf) transmissions. Each base station is connected by trunk lines to a gateway station, which is connected by trunk lines to a local and long distance telephone network.

The cellular telecommunications systems in use today are generally land-based systems that have been installed in large metropolitan areas. Small towns and rural areas cannot economically justify the installation and operation of one of these relatively costly systems. To provide cellular telephone service for these areas, satellite-based cellular telecommunications systems have been proposed which would provide world-wide cellular telephone service. These proposed cellular telephone systems typically include a large constellation of telecommunications satellites in low earth orbit at an altitude of between approximately 740 and 1850 km (400 and 1000 nautical miles), which is just below the Van Allen radiation belt. At these low altitudes, as many as 50 to 80 satellites are required to provide adequate coverage of the entire earth. This results in an extremely costly and complex system with a large number of rapidly changing crosslinks and a large number of beam-to-beam and satellite-to-satellite handovers. Accordingly, there has been a need for a less costly and complex satellite-based cellular telecommunications system. The present invention clearly fulfils this need.

AIAA 92-2060 "Odyssey, A Constellation For Personal Communications" by Roger J. Rusch et al, 14th AIAA International Communication Satellite Systems Conference & Exhibit, March 22-26 1992 Washington, DC, discloses on page 4, left col. first para., that at any time most of the satellites provide primary service to these regions. Additional satellites are used for the transition before a satellite moves on to the next assigned region. Traffic builds up on the approaching satellite while traffic wanes on the receding satellite.

On page 5, left col. third para., it is mentioned that, in making a circuit request, a user terminal transmits requests to overhead satellites. The user will be assigned to the beam that provides the strongest signal to the base station.

The problem underlying the present invention is the reduction of the likelihood of dropouts.

To solve this problem, the above described system is further characterized by the features of the characterizing portion of claim 1.

The present invention includes several features which essentially eliminate beam-to-beam and satellite-to-satellite handovers, thus dramatically reducing the likelihood of dropouts. One of these important features is an assignment of each satellite to a sequence of fixed service regions (rather than a continuously varying coverage area) during each satellite's orbit. The boresight of the satellite's antennas remains centered on a given assigned service region during the entire time the service region is visible to the satellite. This results in an essentially fixed beam pattern thus practically eliminating beam-to-beam handovers. Another one of these important features is a provision for overlap in the coverage of each service region by two successive satellites during the transition in service from one satellite to another. All calls that are placed during the overlap interval are assigned to the arriving satellite. Therefore, only calls placed prior to the overlap interval and extending beyond the overlap interval are subjected to satellite-to-satellite handovers when the departing satellite is reoriented to its new service region.

In one preferred embodiment of the present invention, a constellation of nine satellites provides complete global coverage of the earth by at least one satellite at all times with a minimum elevation angle of 10°. The constellation includes three inclined circular orbital planes which are evenly spaced about the earth with ascending nodes at 120° intervals about the equator. Three satellites are placed in each orbit and evenly spaced at 120° intervals at an altitude of 10360 km (5600 nautical miles). Each orbital plane is inclined at an angle of 55° relative to the equatorial plane. In another preferred embodiment of the invention, a constellation of twelve satellites provides global coverage of the earth by at least two satellites at all times with a minimum elevation angle of 10°. The constellation includes three inclined circular orbital planes with the same characteristics as the nine satellite constellation, except that four satellites are placed in each orbit, evenly spaced at 90° intervals.

It will be appreciated from the foregoing that the present invention represents a significant advance in the field of satellite-based cellular telecommunications systems. Other features and advantages of the present invention will become apparent from the following more detailed description, taken in conjunction with the accompanying drawings, which illustrate, by way of example, the principles of the invention.

### BRIEF DESCRIPTION OF THE DRAWINGS

Figure 1 is a schematic illustration of a satellite-based cellular telecommunications system in accordance with the present invention;
Figure 2 is a schematic illustration of a constellation of telecommunication satellites providing single global coverage of the earth; and
Figure 3 is a schematic illustration of a constellation of telecommunication satellites providing double global coverage of the earth.

### DETAILED DESCRIPTION OF THE PREFERRED EMBODIMENTS

As shown in the drawings for purposes of illustration, the present invention is embodied in a satellite-based cellular telecommunications system employing a constellation of telecommunications satellites in medium earth orbit to provide multibeam radio frequency (rf) communications links for world-wide cellular telephone service with a minimum number of satellites. The telecommunications satellites are placed in a plurality of inclined orbits about the earth at an altitude of between approximately 10360 km and 18500 km (5600 and 10,000 nautical miles). The characteristics of the orbits, including the number of orbits, the inclination of each orbit, the number of satellites in each orbit and the altitude of the satellites, are tailored to maximize the coverage area of the satellites and their related line-of-sight elevation angles, while minimizing propagation time delays, the number of beam-to-beam and satellite-to-satellite handovers, and the total number of satellites. The present invention also includes several additional features which essentially eliminate beam-to-beam and satellite-to-satellite handovers, thus dramatically reducing the likelihood of dropouts.

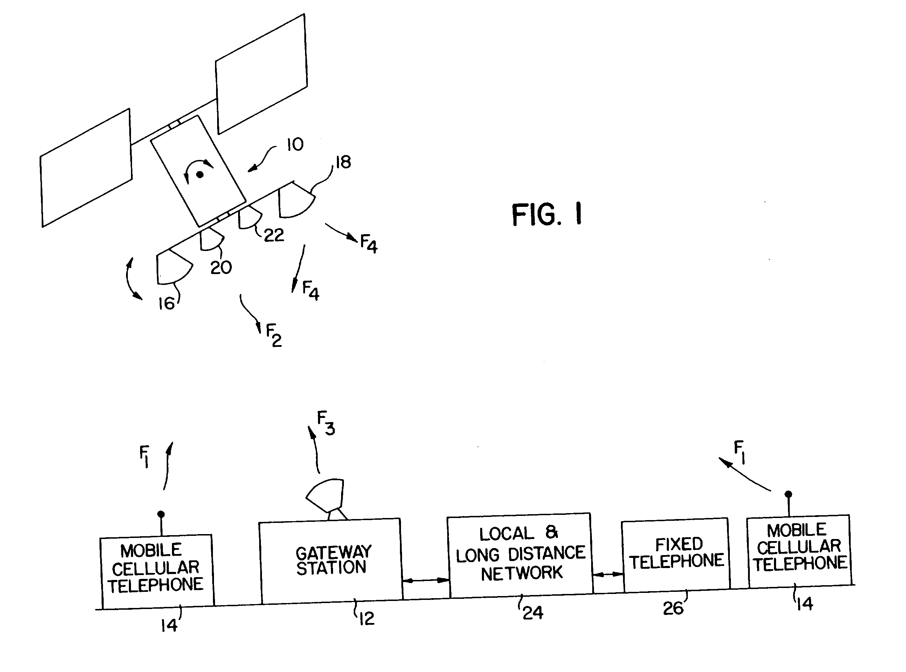

Figure 1 illustrates a satellite-based cellular telecommunications system in accordance with the present invention. The cellular telecommunications system includes a constellation of telecommunications satellites 10 in medium earth orbit, a gateway station 12 situated in each region serviced by the satellites and a plurality of mobile cellular telephones 14 located in the service region of the satellite 10. The mobile cellular telephones 14 can also include mobile facsimile machines and modem-equipped computers. The telecommunications satellite 10 provides a multibeam rf communications link with the mobile cellular telephones 14 using two multibeam antennas 16, 18 and an rf communications link with the gateway station 12 using two antennas 20, 22. Multibeam antenna 16 receives rf signals from the mobile cellular telephones 14 on frequency band F₁. The satellite 10 then amplifies, translates and transmits the rf signals down to the gateway station 12 on frequency band F₂ using antenna 20. The gateway station 12 is connected by trunk lines to a local and long distance telephone network 24, which provides connections to a fixed telephone 26. Rf signals are transmitted from the gateway station 12 back to the telecommunications satellite 10 on frequency band F₃ and received using antenna 22. The satellite 10 then amplifies, translates and transmits the rf signals back down to the mobile cellular telephones 14 on frequency band F₄ using multibeam antenna 18.

Various types of connections are possible between the different users of the cellular telecommunications system of the present invention. A mobile telephone user can communicate with another mobile telephone user in the same service region of the satellite 10 or in the service region of another satellite 10, or with a fixed telephone user located anywhere in the world. If in communication with another mobile telephone user in the same service region, the rf signals are transmitted up from the mobile cellular telephone 14 to the satellite 10, then down to the gateway station 12, then back up to the satellite 10, and then down to the other mobile cellular telephone 14, and vice verse. This type of connection requires a double hop, which doubles the propagation time delay. If in communication with another mobile telephone user in a different service region, the rf signals are transmitted up from the mobile cellular telephone 14 to the satellite 10, then down to the gateway station 12, then through the local and long distance network 24, as necessary, to the gateway station 12 responsible for the other service region, then up to the satellite 10 responsible for the other service region, and then down to the other mobile cellular telephone 14, and vice verse. This type of connection also requires a double hop. If in communication with a fixed telephone user, the rf signals are transmitted up from the mobile cellular telephone 14 to the satellite 10, then down to the gateway station 12, and then through the local and long distance network 24, as necessary, to the fixed telephone 26, and vice verse. This type of connection requires only a single hop.

In an alternative embodiment of the present invention, the satellite 10 performs the function of the gateway station 12 for communications between mobile telephone users located in the same service region, thus requiring only a single hop. In this type of connection, the rf signals are transmitted up from the mobile cellular telephone 14 to the satellite 10, the satellite 10 then performs signal processing on the rf signals to provide any necessary switching between the multiple beams, and then the rf signals are transmitted back down to the other mobile cellular telephone 14, and vice verse.

The propagation time delay depends on the altitude of the telecommunications satellite 10 and the location of the mobile cellular telephones 14 in the service region. In the present invention, at an altitude of between 10360 km and 18500 km (5600 and 10,000 nautical miles), the time delay from the satellite 10 to the ground and vice verse is limited to 60 msec. Therefore, the single hop time delay is limited to 120 msec. At an altitude of 10360 km (5600 nautical miles), the one hop time delay between two mobile cellular telephones 14 located directly below the satellite 10 is 69 msec., while the one hop time delay between two mobile cellular telephones 14 spaced apart at the minimum elevation angle of 10° is 96 msec.

The relationship between station to station propagation time and satellite altitude for a single hop from a station on the ground up to the satellite and back down to the station at maximum range, which occurs when the satellite is at a minimum elevation of 10°, may be shown as follows:

| Satellite Altitude | | Maximum Station to Satellite Propagation Range | | Maximum Station to Station Propagation Time |
|---|---|---|---|---|
| km | (nmi) | km | (nmi) | msec. |
| 10175 | (5500) | 14163 | (7656) | 91 |
| 11100 | (6000) | 15153 | (8191) | 101 |
| 12025 | (6500) | 16139 | (8724) | 108 |
| 12950 | (7000) | 17122 | (9255) | 115 |
| 13875 | (7500) | 18096 | (9782) | 121 |

The mobile cellular telephones 14 and the gateway station 12 are within view of the satellite 10 at all times at an elevation angle of at least 10°. As the satellite 10 moves out of view of the mobile cellular telephones 14 in a particular service region, another satellite 10 from the constellation comes into view. Each satellite 10 has a relatively narrow antenna footprint that is considerably smaller than the total area of visibility of the satellite. This is because it is 5 not practical to serve the entire area of visibility due to power and complexity constraints.

The service region actually covered by the satellite 10 is determined by the composite coverage of the multibeam antennas 16, 18 has 19 beams for a composite footprint coverage of about 23°. Another ring of feeds can be added to the multibeam antenna to provide 37 beams for a composite footprint coverage of about 35°. Each beam has field of view (FOV) of about 5° and is capable of operating with a 1/2 W mobile cellular telephone 14 having an omnidirectional antenna.

The present invention also includes several additional features which essentially eliminate beam-to-beam and satellite-to-satellite handovers, thus dramatically reducing the likelihood of dropouts. One of these important features is an assignment of each satellite to a sequence of fixed service regions during each satellite's orbit. The boresight of the satellite's antennas 16, 18 remains centered on the assigned service region is visible to the satellite with respect to antennas 20, 22 they are gimballed to point to the appropriate gateway station. The resulting nearly-fixed antenna beam pattern practically eliminates beam-to-beam handovers. The antenna boresight remains centered on the service region either by adjusting the attitude of the spacecraft 10 or by rotating gimballed antennas.

Another one of the important features of the present invention is a provision for overlap in the coverage of each service region by two successive satellites during the transition in service from one satellite to another. All calls that are placed during the overlap interval are assigned to the arriving satellite. Therefore, only calls placed prior to the overlap interval and extending beyond the overlap interval are subjected to satellite-to-satellite handovers when the departing satellite is reoriented to its new service region.

In the preferred embodiments of the present invention, the constellation of telecommunications satellites 10 has three inclined orbital planes which are evenly spaced about the earth with ascending nodes at 120° intervals about the equator. The satellites 10 are placed in medium earth orbit at an altitude of between 10360 km and 18500 km (5600 and 10,000 nautical miles). This range of altitudes is above the Van Allen radiation belt, but substantially below the altitude for geosynchronous orbit. This provides good visibility with a minimum number of satellites without excessive power requirements. At least one of the telecommunications satellites 10 is visible at all times from each mobile cellular telephone 14 and gateway station 12 at an elevation angle of at least 10° to prevent shadowing.

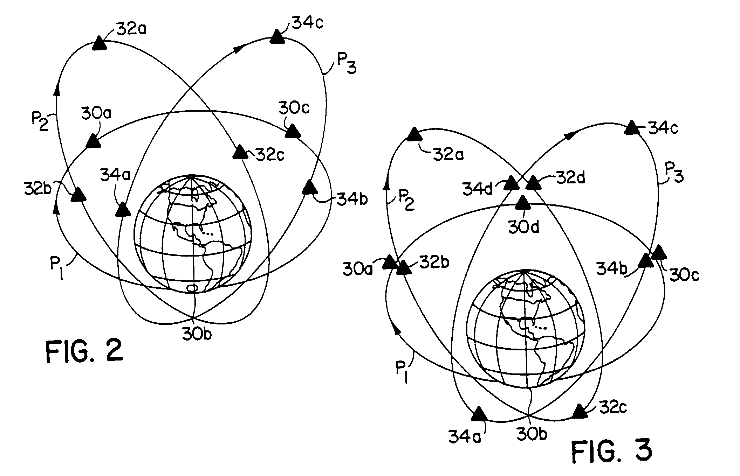

Figure 2 shows a constellation of nine satellites which provides global coverage of the earth by at least one satellite 10 at all times with a minimum elevation angle of 10°. The nine satellites are arranged in three circular orbital planes P₁, P₂, P₃, with three satellites 30a-30c located in orbital plane P₁, three satellites 32a-32c located in orbital plane P₂ and three satellites 34a-34c located in orbital plane P₃. The satellites are evenly spaced at 120° intervals in each orbital plane at an altitude of 10360 km [5600 nautical miles]. Each orbital plane is inclined at an angle of 55° relative to the equatorial plane. The relative phase angles between the satellites in different orbital planes is 80°. Therefore, before one satellite in the constellation disappears from a user's view, at least one additional satellite comes into view above an elevation angle of 10°.

Figure 3 shows a constellation of twelve satellites which provides global coverage of the earth by at least two satellites at all times with a minimum elevation angle of 10°. The twelve satellites are arranged in the three circular orbital planes P₁, P₂, P₃, with four satellites 30a-30d located in orbital plane P₁, four satellites 32a-32d located in orbital plane P₂ and four satellites 34a-34d located in orbital plane P₃. The satellites are evenly spaced at 90° intervals in each orbital plane at an altitude of 10360 km (5600 nautical miles). Each orbital plane is inclined at an angle of 55° relative to the equatorial plane. The relative phase angles between satellites in different orbital planes is 90°.

| | Coverage | |
|---|---|---|
| | Global | |
| | Single | Double |
| Number of Satellites | 9 | 12 |
| Number Orbital Planes | 3 | 3 |
| Satellites per Plane | 3 | 4 |
| Apogee Altitude (nm) | 5600 | 5600 |
| Perigee Altitude (nm) | 5600 | 5600 |
| Inclination Angle | 55° | 55° |
| Ascending Node Spacing | 120° | 120° |
| Argument of Perigee | 0° | 0° |
| Relative Phase Angle | 80° | 90° |
| Minimum Elevation Angle | 10° | 10° |

The constellations providing single satellite coverage can be initially formed and then the coverage expanded later to provide double coverage by the addition of only three satellites. Conversely, the constellations providing double coverage allow for the failure of one satellite in each orbital plane without the loss of full service. The position of the remaining satellites in the orbital plane can be adjusted to provide single coverage until the satellite is repaired or replaced.

From the foregoing, it will be appreciated that the present invention represents a significant advance in the field of satellite-based cellular telecommunications systems. Although several preferred embodiments of the invention have been shown and described, it will be apparent that other adaptations and modifications can be made without departing from the scope of the invention. Accordingly, the invention is not to be limited, except as by the following claims.

## Claims

1. A satellite-based cellular telecommunications system comprising:
- at least one hand held mobile cellular telephone station (14) having an omnidirectional antenna for transceiving RF;
- at least one gateway station (12);
- said mobile cellular telephone station (14) and said gateway station (12) being spaced from one another within a predetermined region of the earth;
- satellite constellation means (P1, P2, P3; 30a-30c, 32a-32c, 34a-34c) located in space over the earth for providing an RF frequency (rf) translation communication link with said mobile cellular telephone station (14) and said gateway station (12);
- said satellite constellation means comprising a plurality of telecommunications satellites (30a-30c, 32a-32c, 34a-34c),
- each of said satellites (30a-30c, 32a-32c, 34a-34c) including RF transceiving means having multiple RF output beams (16, 18), whereby a communications path may be established between said mobile cellular telephone station (14) and said gateway station (12);
- said satellites (30a-30c, 32a-32c, 34a-34c) being spaced and moving in a plurality of orbits (P1, P2, P3) inclined at a predetermined angle relative to the equatorial plane of the earth at an altitude of between approximately 10360 km (5600 nmi) and 18500 km (10000 nmi);
- wherein the characteristics of these orbits (P1, P2, P3), including
the number of orbits (P1, P2, P3),
the inclination of each orbit (P1, P2, P3),
the number of satellites (30a-30c, 32a-32c, 34a-34c) in each orbit (P1, P2, P3) and
the altitude of the satellites (30a-30c, 32a-32c, 34a-34c) are tailored to maximize the coverage area of the satellites (30a-30c, 32a-32c, 34a-34c) and their related line-of-sight elevation angles, while minimizing
propagation time delays,
the number of beam-to-beam and satellite-to-satellite handovers and the number of satellites (30a-30c, 32a-32c, 34a-34c); and
- wherein the number of beam-to-beam handovers is further reduced by assigning each satellite a fixed service region and maintaining the antenna boresight of the satellite centered on said service region during the time the service region is visible to the satellite; and
- wherein a portion of a coverage portion of a departing satellite overlaps a portion of a coverage portion of an arriving satellite, characterized in that all calls placed to or from a user located within the coverage overlap region are assigned to said arriving satellite.

2. The satellite-based cellular telecommunications system as set forth in claim 1, wherein the attitude of the satellites (30a-30c, 32a-32c, 34a-34c) is adjusted to maintain the antenna boresight centered on the service region.

3. The satellite-based cellular telecommunications system as set forth in claim 1, wherein the antenna (16, 18) is gimballed and the antenna is rotated to maintain the antenna boresight centered on the service region.

4. The satellite-based cellular telecommunications system as set forth in claim 1, wherein the orbits (P₁, P₂, P₃) are approximately circular.

5. The satellite-based cellular telecommunications system as set forth in claim 1, wherein the elevation angles are always at least 10°.

6. The satellite-based cellular telecommunications system according to claim 1, wherein the transceiving means having multiple RF output beams for a composite foot print coverage of about 35°.

## Patentansprüche

1. Zellulares Telekommunikationssystem mit:
- wenigstens einer handgehaltenen mobilen zellularen Telefonstation (14) mit einer omnidirektionalen Antenne zum Senden/Empfangen von Funksignalen;
- wenigstens einer Gatewaystation (12);
wobei die mobile zellulare Telefonstation (14) und die Gatewaystation (12) in einer vorbestimmten Region der Erde voneinander beabstandet sind;
- wobei eine Satellitenanordnung (P₁, P₂, P₃; 30a-30c, 32a-32c, 34a-34c) im Weltraum über der Erde angeordnet ist um eine Funksignalfrequenz-Umsetzungskommunikationsverbindung (16, 18) zwischen der mobilen zellularen Telefonstation (14) und der Gatewaystation (12) bereitzustellen;
- wobei die Satellitenanordnung folgendes aufweist:
eine Vielzahl von Telekommunikationssatelliten (30a-30c, 32a-32c, 34a-34c),
wobei jeder der Satelliten Funksignal-Sende/Empfangseinrichtungen mit mehrfachen Funksignalausgangsstrahlen (16, 18) umfaßt, wodurch ein Kommunikationspfad zwischen der mobilen zellularen Telefonstation (14) und der Gatewaystation (12) herstellbar ist,
wobei die Satelliten voneinander beabstandet sind und sich in einer Vielzahl von Orbitalbahnen (P₁, P₂, P₃), die unter einem vorbestimmten Winkel relativ zur Äquatorialebene der Erde in einer Höhe von zwischen annähernd 10.360 km (5.600 nmi) und 18.500 km (10.000 nmi) geneigt ist;
wobei die Eigenschaften dieser Orbitalbahnen (P₁, P₂, P₃), die die Anzahl der Orbitalbahnen, die Inklination jeder Orbitalbahn, die Anzahl von Satelliten (30a-30c, 32a-32c, 34a-34c) in jeder Orbitalbahn und die Höhe der Satelliten umfassen, so gestaltet sind, daß die Überdeckungsregion der Satelliten und ihre zugehörigen Sichtlinien-Elevationswinkel maximiert sind,
während die Übertragungszeitverzögerungen, die Anzahl der Strahl-auf-Strahl- und Satelliten-auf-Satelliten-Übergaben, sowie die gesamte Anzahl der Satelliten minimiert ist, und wobei die Anzahl der Strahl-auf-Strahl-Übergaben weiter verringert ist, in dem jedem Satelliten ein fester Versorgungsbereich zugeordnet wird, und die Antennen-Ausleuchtzone des Satelliten auf den Versorgungsbereich während der Zeit, in der der Versorgungsbereich für den Satelliten sichtbar ist, zentriert bleibt;
und wobei ein Bereich einer Überdeckungsregion eines sich entfernenden Satelliten mit einem Bereich einer Überdeckungsregion eines ankommenden Satelliten überlappt, dadurch gekennzeichnet, daß Anrufe von oder für einen Benutzer der sich innerhalb der Überdeckungs-Überlappungsregion befindet, dem ankommenden Satelliten zugewiesen werden.

2. Das zellulare Kommunikationssystem nach Anspruch 1, in dem die Ausrichtung der Satelliten (30a-30c, 32a-32c, 34a-34c) eingestellt wird, um die Antennenausrichtung auf den Versorgungsbereich zentriert zu halten.

3. Das zellulare Kommunikationssystem nach Anspruch 1, bei dem die Antenne (16, 18) schwenkbar gelagert ist und die Antenne gedreht wird um die Antennenausrichtung auf den Versorgungsbereich zentriert zu halten.

4. Das zellulare Kommunikationssystem nach Anspruch 1, in dem die Orbitalbahnen (P₁, P₂, P₃) annähernd kreisförmig sind.

5. Das zellulare Kommunikationssystem nach Anspruch 1, in dem die Erhebungswinkel stets wenigstens 10° betragen.

6. Das zellulare Kommunikationssystem nach Anspruch 1, in dem die Sende-/Empfangseinrichtungen mehrfache Funksignalausgangsstrahlen für eine zusammengesetzte Bodenüberdeckung von etwa 35° haben.

## Revendications

1. Système de télécommunication cellulaire basé sur des satellites comprenant :
- au moins un poste de téléphone cellulaire mobile portatif (14) ayant une antenne omnidirectionnelle pour émettre et recevoir la radiofréquence ;
- au moins un poste passerelle (12) ;
- ce poste téléphone cellulaire mobile (14) et ce poste passerelle (12) étant espacés l'un de l'autre dans une région prédéterminée de la terre ;
- des moyens de constellations satellites (P1, P2, P3 ; 30a30c, 32a-32a, 34a-34c) situés dans l'espace au-dessus de la terre pour fournir une liaison de communication de traduction de fréquence RF avec le poste de téléphone cellulaire mobile (14) et le poste passerelle (12) ;
- les moyens de constellations satellites comprenant plusieurs satellites de télécommunication (30a-30c, 32a-32c, 34a-34c) ;
- chacun des satellites (30a-30a, 32a-32c, 34a-34c) comprenant des moyens d'émission et de réception RF avec des faisceaux de sortie RF multiples (16, 18) permettant d'établir une voie de communication entre le poste de téléphone cellulaire mobile (14) et le poste passerelle (12) ;
- les satellites (30a-30c, 32a-32c, 34a-34c) étant espacés et se déplaçant dans une pluralité d'orbites (P1, P2, P3), inclinés selon un angle prédéterminé par rapport au plan équatorial de la terre à une altitude entre environ 10360 km (5600 nmi) et 18500 km (10.000 nmi) ;
- dans lequel les caractéristiques de ces orbites (P1, P2, P3) comprenant
le nombre d'orbites (P1, P2, P3),
l'inclinaison de chaque orbite (P1, P2, P3),
le nombre de satellites (30a-30a, 32a-32c, 34a-34a) dans chaque orbite (P1, P2, P3) et
l'altitude des satellites (30a-30c, 32a-32c, 34a-34c), sont adaptées pour maximiser la zone de couverture des satellites (30a-30c, 32a-32c, 34a-34a) et leurs angles d'élévation de ligne de visée correspondants, tout en minimisant
les retards de temps de propagation,
le nombre de relayage faisceau à faisceau et satellite à satellite et le nombre de satellites (30a-30c, 32a-32c, 34a-34c) ; et
- dans lequel le nombre de relayage faisceau à faisceau est encore réduit en affectant à chaque satellite une région de service fixe et en maintenant la visée d'antenne du satellite centrée sur cette région de service pendant le temps où la région de service est visible pour le satellite ; et
- dans lequel une partie de la portion de couverture d'un satellite au départ recouvre une partie de le portion de couverture d'un satellite d'arrivée, caractérisé en ce que tous les appels passés à ou provenant d'un utilisateur situé à l'intérieur de la zone de chevauchement de couverture sont affectés au satellite d'arrivée.

2. Système de télécommunication cellulaire basé sur des satellites selon la revendication 1, dans lequel l'altitude des satellites (30a-30c, 32a-32c, 34a-34c) est ajustée pour maintenir la visée de l'antenne centrée sur la région de service.

3. Système de télécommunication cellulaire basé sur des satellites selon la revendication 1, dans lequel l'antenne (16, 18) est suspendue au cardan et l'antenne est mise en rotation pour maintenir la visée d'antenne centrée sur la région de service.

4. Système de télécommunication cellulaire basé sur des satellites selon la revendication 1, dans lequel les orbites (P1, P2, P3) sont approximativement circulaires.

5. Système de télécommunication cellulaire basé sur des satellites selon la revendication 1, dans lequel les angles d'élévation sont toujours au moins 10°.

6. Système de télécomnunication cellulaire basé sur des satellites selon la revendication 1, dans lequel les moyens d'émission et de réception ont des faisceaux de sortie RF multiples pour une couverture de contact au sol composite d'environ 35°.
